# EUROPÄISCHE PATENTSCHRIFT

(11) **EP 0 783 664 B1**
(45) Veröffentlichungstag und Bekanntmachung des Hinweises auf die Patenterteilung: **04.06.2003**
(21) Anmeldenummer: 95928946.3
(22) Anmeldetag: 17.08.1995
(51) Int. Cl.: G01D 3/028, B60R 21/00

(54) **Sensor an Mikrorechner mit Störspannungsunterdrückung**
Sensor with microcomputer and suppression of noise voltage
Capteur avec micro calculateur et suppression de voltage parasite

(30) Priorität: 10.09.1994 DE 4432229
(43) Veröffentlichungstag der Anmeldung: 16.07.1997
(73) Patentinhaber: ROBERT BOSCH GMBH, 70442 Stuttgart (DE)
(72) Erfinder: SCHUMACHER, Hartmut, D-71691 Freiberg (DE); OSWALD, Klaus, D-73666 Baltmannsweiler (DE); CRISPIN, Norbert, D-71706 Markgröningen (DE); DAIBER, Martin, D-73760 Ostfilern-Ruit (DE)
(86) Internationale Anmeldenummer: DE9501082
(87) Internationale Veröffentlichungsnummer: WO96007872

(56) Entgegenhaltungen:
- DE-A- 3 411 115
- US-A- 4 800 513
- US-A- 5 062 065
- Patent Abstracts of Japan, Band 9, Nr 221(P-386); & JP,A,6080712 (HITACHI SEISAKUSHO K.K.), 1985-05-08

## Beschreibung

### Stand der Technik

Die Erfindung geht aus von einem elektronischen Gerät nach dem Oberbegriff des Anspruchs 1. Ein derartiges Gerät ist beispielsweise aus US-PS 5,037,129 A1 der Anmelderin bekannt. Wenn bei derartigen Geräten Sensorsignale verarbeitet werden müssen, die mit starken Störsignalen behaftet sind, kann es insbesondere bei der Umwandlung der analogen Sensorsignale in Digitalsignale zu unerwünschten Störungen kommen. Solche Störungen machen sich beispielsweise als "Übersprechen" bemerkbar. Darunter versteht man das Einkoppeln unerwünschter Störsignalanteile auf benachbarte Leitungen oder zum Beispiel benachbarte Kanäle eines mehrkanaligen Analog/Digital-Wandlers (A/D-Wandlers).

### Vorteile der Erfindung

Das erfindungsgemäße elektronische Gerät ermöglicht auf besonders einfache und elegante Weise die Unterdrückung der unerwünschten Störimpulse, so daß das als erwünschtes Meßsignal zu verarbeitende Ausgangssignal eines Sensors im wesentlichen ungestört weiterverarbeitet, insbesondere in ein entsprechendes digitales Ausgangssignal umgewandelt werden kann.

### Zeichnung

Ein Ausführungsbeispiel der Erfindung ist in der Zeichnung dargestellt und in der nachfolgenden Beschreibung näher erläutert.

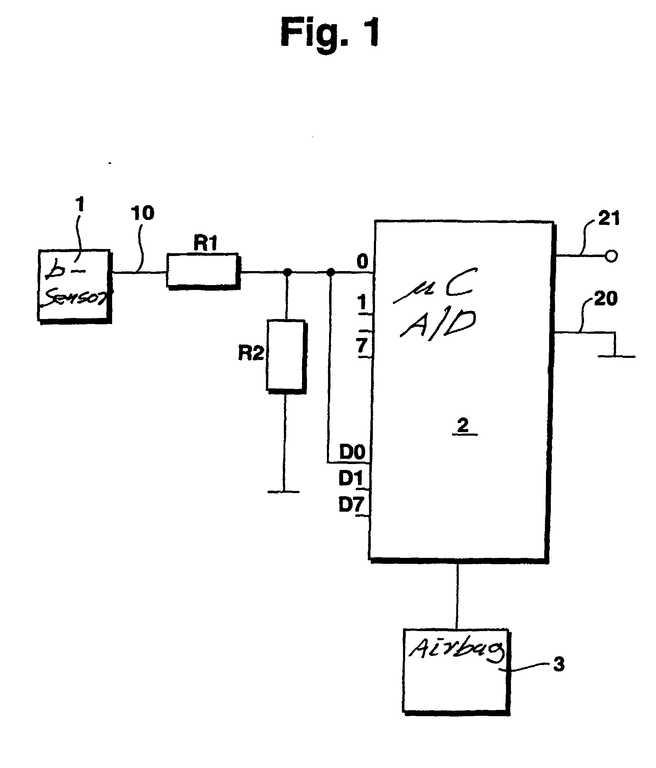

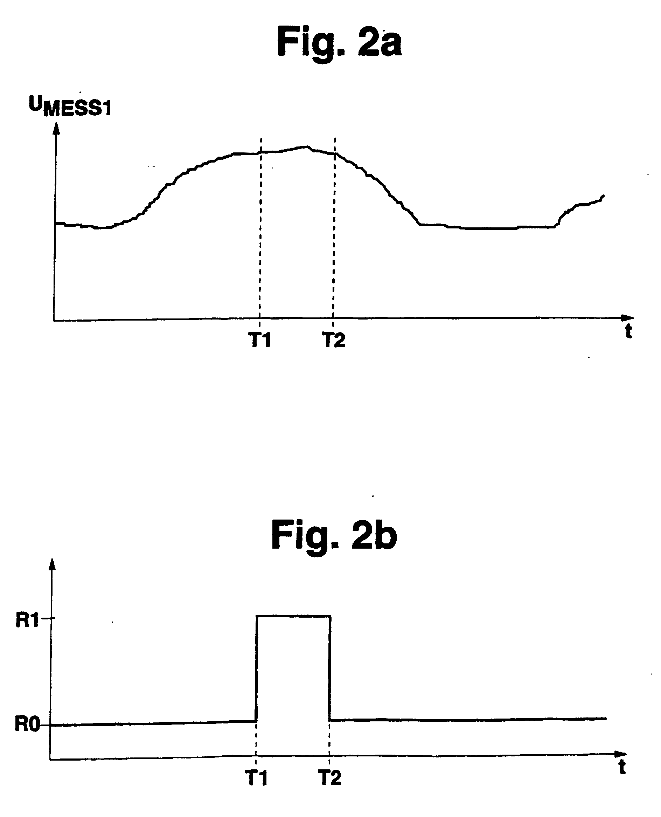

Es zeigen: Figur 1 ein vereinfachtes Blockschaltbild des erfindungsgemäßen elektronischen Gerätes, Figur 2 Signaldiagramme als Funktion der Zeit.

### Beschreibung des Ausführungsbeispiels

Als Ausführungsbeispiel der Erfindung ist in Figur 1 blockschaltmäßig ein elektronisches Gerät für ein Airbagsystem dargestellt, das also die Schutzeinrichtungen für Fahrzeuginsassen steuert. Es umfaßt einen beschleunigungsempfindlichen Sensor 1, vorzugsweise einen piezoelektrischen Sensor, dessen Ausgangsanschluß mit einem Spannungsteiler R1, R2 verbunden ist. Der Fußpunkt des Spannungsteilers R1, R2 ist mit dem Masseanschluß verbunden. Der Abgriff des Spannungsteilers R1, R2 ist in dem dargestellten Blockschaltbild mit einem Eingangsanschluß, und zwar mit dem Eingangsanschluß 0 eines mehrere Eingangsanschlüsse umfassenden Mikrorechners 2 verbunden. Die mehreren Eingangsanschlüsse 0 bis 7 des Mikrorechners 2 werden zeitmultiplexartig mit dem Eingangsanschluß eines in dem Mikrorechner enthaltenen A/D-Wandlers verbunden, der die analogen Ausgangssignale des Sensors 1 in entsprechende Digitalsignale umwandelt. Jeder der dargestellten Eingangsanschlüsse 0 bis 7 kann mit einer entsprechenden Eingangsbeschaltung wie der Eingangsanschluß 0 beschaltet sein. Es können demzufolge mehrere Sensoren 1 und mehrere Spannungsteiler R1, R2 vorgesehen sein, die mit entsprechenden Eingangsanschlüssen des Mikrorechners 2 verbunden sind. Der Mikrorechner 2 umfaßt ferner zwei Referenzsspannungsanschlüsse 20, 21, an die Referenzspannungen anlegbar sind. Beispielsweise kann der Referenzspannungsanschluß 20 mit dem Masseanschluß verbunden sein, während an den Referenzspannungsanschluß 21 eine vorgebbare Referenzspannung anlegbar ist. Ein Ausgangsanschluß 22 des Mikrorechners 2 ist mit mindestens einem Airbagssystem 3 verbunden, das zum Schutz von Fahrzeuginsassen vorgesehen ist. Das an dem Ausgangsanschluß 10 des Sensors 1 anstehende Ausgangssignal wird dem Spannungsteiler R1, R2 zugeführt und dort auf den Erfassungsbereich des A/D-Wandlers des Mikrorechners 2 abgebildet. Dieser Erfassungsbereich liegt beispielsweise in dem Spannungsintervall zwischen 0 und 5 Volt. Dadurch ist die eigentliche Meßaufgabe der Erfassung des Ausgangssignals des Sensors 1 erfüllt. Treten jedoch aber das Ausgangssignal des Sensors 1 überlagernde Störspannungen auf, die das zulässige Meßintervall verlassen, müssen Schutzschaltungen in der Eingangsbeschaltung des A/D-Wandlers diese zusätzliche Belastung aufnehmen. In der Regel wird dies bei den heute handelsüblichen Mikrorechnern ermöglicht, ohne daß es zu einer Zerstörung der Eingangsbeschaltung führt. Es kann jedoch in den meisten Fällen aber nicht garantiert werden, daß durch Ansprechen der für Schutzzwecke vorgesehenen Eingangsbeschaltung eines A/D-Kanals, beispielsweise des in Figur 1 mit 0 bezeichneten Kanals, die Messungen auf den anderen Kanälen, also beispielsweise auf den Kanälen 1 bis 7, ohne Störungen durchgeführt werden können. Um auch in diesem Fall eine hohe Störspannungsunterdrückung zu gewährleisten, ist der jeweils zu dem A/D-Wandler führende Eingangsanschluß des Mikrorechners mit zwei unterschiedlichen Potentialwerten verbindbar ausgestaltet. Hierbei wird davon ausgegangen, daß die Ausgangssignale der Sensoren 1 jeweils zeitmultiplex- oder taktartig abgefragt werden, um die dann während der Abfragezeit festgestellten Ausgangssignale in digitale Signale umzuwandeln. Die Betriebszeit läßt sich demzufolge in Meßphasen und Ruhephasen unterscheiden. Erfindungsgemäß wird nun vorgesehen, daß während der jeweiligen Meßphasen der jeweilige Eingangsanschluß des Mikrorechners 2 auf ein erstes Potential und während der jeweiligen Ruhephasen auf ein davon abweichendes Potential gelegt wird. Auf diese Weise wird sichergestellt, daß an einem Eingangsanschluß des Mikrorechners 2 in einer Ruhephase auftretende Störimpulse benachbarte Signalkanäle nicht beeinträchtigen können. Auf besonders zweckmäßige und einfache Art wird die Verbindug eines Eingangsanschlusses eines Mikrorechners mit einem jeweils unterschiedlichen Potential dadurch herbeigeführt, daß der Eingangsanschluß mit einem Digital-Port des Mikrorechners 2 verbunden wird. Wie in Figur 1 dargestellt, ist also beispielsweise der Eingangsanschluß 0 des Mikrorechners 2 zusätzlich mit dem Digital-Port D0 des Mikrorechners 2 verbunden. Die A/D-Eingänge 0 bis 7 des Mikrorechners 2 werden zeitmultiplexartig mit dem Eingangsanschluß des in dem Mikrorechner 2 angeordneten A/D-Wandlers verbunden, derart, daß jeder Eingangskanal 0 bis 7 für eine vorgebbare Meßzeit, beispielsweise 6 Mikrosekunden mit dem Eingangsanschluß des A/D-Wandlers verbunden ist. Dieser Meßvorgang wird anhand von Figur 2 erläutert. Figur 2a zeigt beispielhaft das Ausgangssignal des Sensors 1, nämlich die Spannung U_{MESS1} als Funktion der Zeit t. Dieses Ausgangssignal liegt über den Spannungsteiler R1, R2 an dem A/D-Eingang 0 des Mikrorechners 2 an und wird während eines Zeitintervalls T1, T2 abgetastet und in ein entsprechendes Digitalsignal umgewandelt. Wie aus Figur 2b hervorgeht, ist in diesem Zeitintervall T1, T2 der mit dem A/D-Eingang 0 verbundene Digital-Port D0 des Mikrorechners 2 derart angesteuert, daß er sich im Tri-State, also in einem hochohmigen Zustand, befindet. Beispielsweise stellt er einen Widerstand R1 dar, der wesentlich größer ist als der Widerstand R0, den der Digital-Port D0 des Mikrorechners 2 außerhalb des Zeitintervalls T1, T2 annimmt. Aufgrund des relativ niederohmigen Abschlusses des A/D-Eingangs 0 außerhalb des Zeitintervalls T, T2 können demzufolge dem Ausgangssignal des Sensors 1 überlagerte Störimpulse nicht zum Übersprechen und zur Störung der Messungen auf den anderen A/D-Eingängen führen.

In einem Ausführungsbeispiel der Erfindung haben die Widerstände R1, R2 des Spannungsteilers R1, R2 beispielsweise einen Wert von jeweils 50 Kiloohm. Es werde weiterhin angenommen, daß eine Störspannung von ±50 Volt dem Ausgangssignal U_{MESS1} des Sensors 1 überlagert sei. Außerhalb des Zeitintervalls T1, T2 liegt der Digital-Port D0 des Mikrorechners 2 auf einem relativ niedrigen Widerstand R0 von beispielsweise 100 Ohm. Daraus ergibt sich, daß am A/D-Eingang 0 des Mikrorechners 2 noch höchstens eine Störspannung von weniger als 100 Millivolt anliegt, die nicht mehr zu Störungen führt.

## Patentansprüche

1. Elektronisches Gerät mit einem Sensor (1), mit einem das Ausgangssignal des Sensors (1) auswertenden Mikrorechner (2), der einen die analogen Ausgangssignale des Sensors (1) in Digitalsignale umwandelnden A/D-Wandler umfasst, **dadurch gekennzeichnet, dass** der A/D-Eingang (0,1...7) des Mikrorechners (2) während eines Messintervalls (T1, T2) auf ein erstes Potential (Widerstand R1) und außerhalb dieses Messintervalls (T1, T2) auf ein zweites Potential (Widerstand R0) legbar ist, dass jeweils ein A/D-Eingang (0, 1...7) des Mikrorechners (2) mit jeweils einem Digital-Port (D0, D1....D7) des Mikrorechners (2) verbunden ist, dass jeder der Digital-Ports (D0, D1...D7) des Mikrorechners (2) derart ansteuerbar ist, dass er während des Messintervalls (T1, T2) einen vergleichsweise hohen Widerstand (R1) und außerhalb des Messintervalls (T1, T2) einen vergleichsweise niedrigen Widerstand (R0) bietet.

2. Elektronisches Gerät nach Anspruch 1, **dadurch gekennzeichnet, dass** die Ausgangsanschlüsse (10) der Sensoren (1) über Spannungsteiler (R1, R2) mit den A/D-Eingängen (0,1... 7) des Mikrorechners (2) verbunden sind.

## Claims

1. Electronic appliance having a sensor (1), having a microcomputer (2) which evaluates the output signal from the sensor (1) and comprises an A/D converter which converts the analogue output signals from the sensor (1) into digital signals, **characterized in that** the A/D input (0,1....7) of the microcomputer (2) can be put at a first potential (resistance R1) during a test interval (T1, T2) and at a second potential (resistance R0) outside of this test interval (T1, T2), **in that** a respective A/D input (0,1....7) on the microcomputer (2) is connected to a respective digital port (D0, D1....D7) on the microcomputer (2), **in that** each of the digital ports (D0, D1....D7) on the microcomputer (2) can be actuated such that it provides a comparatively high resistance (R1) during the test interval (T1, T2) and a comparatively low resistance (R0 outside of the test interval (T1, T2).

2. Electronic appliance according to Claim 1, **characterized in that** the output connections (10) on the sensors (1) are connected to the A/D inputs (0,1...7) on the microcomputer (2) via voltage dividers (R1, R2).

## Revendications

1. °) Appareil électronique comprenant un capteur (1), un micro-ordinateur (2) évaluant le signal de sortie du capteur (1) et comportant un convertisseur A/D transformant les signaux analogiques de sortie du capteur (1) en signaux numériques,
**caractérisé en ce qu'**
- à l'entrée A/D (0,1...7) du micro-ordinateur (2) peut être appliqué, pendant un intervalle de mesure (T1, T2) un premier potentiel (résistance R1) et, en dehors de cet intervalle (T1, T2) un second potentiel (résistance RO),
- chaque fois une entrée A/D (0, 1...7) du micro-ordinateur (2) est reliée à un port numérique (DO, D1, ...D7) du micro-ordinateur (2) qui peut être commandé de manière que pendant l'intervalle de temps (T1, T2) il présente une résistance élevée (R1) tandis qu'en dehors de cet intervalle (T1, T2) il présente une résistance relativement basse (RO).

2. Appareil électronique selon la revendication 1,
**caractérisé en ce que**
les raccords de sortie (10) des capteurs (1) sont reliés par l'intermédiaire de diviseurs de tension (R1, R2) aux entrées (0, 1...7) du micro-ordinateur (2).
